# EUROPEAN PATENT APPLICATION

(11) **EP 4 203 267 A1**
(43) Date of publication of application: **28.06.2023**
(21) Application number: 21217471.8
(22) Date of filing: 23.12.2021
(51) Int. Cl.: H02K 3/52, H02K 3/34, H02K 15/12, H02K 3/30

(54) **OVERMOLDED SEPARATELY EXCITED ROTOR**

(71) Applicant: Valeo eAutomotive Germany GmbH, 91056 Erlangen (DE)
(72) Inventor: Wieczorek, Christoph, 97616 c/o VSeA, Siemenstr. 14, Bad Neustadt a.d.Saale (DE); BACH, Regina, 97616 c/o VSeA, Siemenstr. 14, Bad Neustadt a.d.Saale (DE)
(74) Representative: Valeo Powertrain Systems

(57) **Abstract**

The invention concerns a rotor (1) comprising a rotor shaft (4) configured to rotate around an axis (X) of rotation; a rotor body (2) formed of a stack of laminations, a field coil, and two end plates (5) configured to come respectively against two axial ends of the rotor body (2). The rotor body (2) has a plurality of teeth (21) projecting radially and slots (22). The field coil is wound around each tooth of the plurality of teeth (21), the field coil passing through the slots (22) and over the two end plates (5). The rotor (1) further comprises an insulation system (6) arranged on walls (23) of the slots (22), the insulation system (6) and at least one of the two end plates (5) being overmolded on the rotor body (2) such that to form together a one-piece overmolded assembly.

## Description

### FIELD OF THE INVENTION

The present invention belongs to the field of rotary electric machines configured to be on board of an automotive vehicle, such as an electric vehicle (EV) or a hybrid vehicle (HV).

The present invention relates in particular to the field of separately excited rotors, also called wound rotors or slip ring rotors, integrated to rotary electric machines.

### BACKGROUND OF THE INVENTION

As is known, an electric or a hybrid automotive vehicle presents an electric drive comprising a rotary electric machine which need to be supplied with electric power, for instance by a high voltage power supply battery, to deliver a mechanical power in order to ensure the propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, notably the wheels of the vehicle.

In particular, it is known to have the rotor separately excited using a field coil. This type of rotors is commonly referred as wound rotors or slip ring rotors. Such a rotor comprises a rotor body formed of a stack of laminations and has a plurality of teeth projecting radially. Then, the field coil is configured to be wound around each of the plurality of teeth, while being electrically insulated from the stack of laminations.

A conventional solution to electrically insulate the field coil from the stack of laminations is to provide an insulation paper in-between the plurality of teeth, as described in document EP2807726A1. In a general manner, the insulation paper is pre-folded and positioned manually on the stack of laminations before proceeding with the winding of the field coil above the insulation paper. The positioning of the insulation paper needs thus to be secured, otherwise the insulation paper could be damaged or misplaced during the winding process. This could reduce the quality of the insulation between the field coil and the stack of laminations. Moreover, securing the positioning of the insulation paper is complex from a manufacturing point of view.

Furthermore, the rotor commonly comprises two end plates located at two axial ends of the rotor body such that to provide a mechanical holding of the stack of laminations and an electrical insulation of the rotor body from coil ends of the field coil. The two end plates are to be well fixed to the rotor body to prevent a relative twist between the rotor body and the two end plates while the rotor is rotating. Such a relative twist induces a mechanical stress that could wear off or damage at least partially the rotor. In that aim, the two end plates are generally fixed on the rotor body using either an additional gluing material, or a mechanical fixing system, such as clamping elements, which impacts the cost of the rotor. Moreover, those solutions are complex to implement from a manufacturing point of view.

In this context, the main objective of the present invention is to provide a rotor with an electrical insulation system, that is easier to produce and that presents an improved mechanical holding of an assembly of the rotor body and the two end plates.

### SUMMARY OF THE INVENTION

More precisely, the present invention concerns a rotor for a rotary electric machine, the rotor comprising a rotor shaft configured to rotate around an axis of rotation, a rotor body formed of a stack of laminations and being configured to be mounted coaxially on the rotor shaft, a field coil, two end plates configured to come respectively against two axial ends of the rotor body, and an insulation system. Moreover, the rotor body has a plurality of teeth projecting radially and slots corresponding to space between adjacent teeth of the plurality of teeth. The field coil is wound around each tooth of the plurality of teeth, the field coil passing through the slots and over the two end plates. The insulation system is arranged on walls of the slots between the rotor body and the field coil such that to electrically insulate the rotor body from the field coil. Then, the insulation system and at least one of the two end plates are overmolded on the rotor body such that to form together a one-piece overmolded assembly.

The present invention provides the substantial gain of easing the manufacturing of the rotor, notably by reducing the number of pieces to assemble together. For example, the invention enables to avoid using a glue for fixating at least one of the two end plates. Besides, the invention provides an alternative to using a plurality of insulation papers for providing electrical insulation between the rotor body and the field coil in-between the plurality of teeth, which is complex and time consuming. The one-piece overmolded assembly is less likely to move during winding the field coil around the plurality of teeth, and during the in-service life of the rotor.

Moreover, the one-piece overmolded assembly allows to improve the mechanical holding of the two end plates and of the insulation system, especially by reducing potential twisting or by preventing an improper positioning of either one of the two end plates or of the insulation system.

In a preferred embodiment, the insulation system and the two end plates are overmolded on the rotor body such that to form together the one-piece overmolded assembly.

Advantageously, the two end plates and the insulation system are made out of a plastic material able to electrically insulate the rotor body from the field coil.

Advantageously, the two end plates and the insulation system are made out of a polyphthalamide material.

Advantageously, the two end plates and the insulation system are respectively made out of a different material.

The invention also concerns a method for producing the rotor as previously described, the method comprising:
- stacking the laminations together such that to form the rotor body;
- overmolding the rotor body with the insulation system and at least one of the two end plates.

Advantageously, overmolding comprises overmolding the rotor body with the insulation system and the two end plates.

According to an aspect of the invention, the invention relates to the rotary electric machine comprising the rotor as described previously. The rotary electric machine especially comprises a stator, the stator surrounding coaxially the rotor.

Another aspect of the invention is the electric drive, comprising the rotary electric machine and an inverter configured to convert a direct current voltage coming from a high-voltage power supply battery into an alternating current voltage so as to drive the rotary electric machine. The AC voltage may be a multiphase AC voltage, especially a three-phase voltage.

A further aspect of the invention is an electric of a hybrid vehicle, comprising the electric drive for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of a view of an example of a rotor according to an embodiment of the invention;
Figure 2 is a schematic diagram of a view of a rotor body of the example of the rotor according to an embodiment of the invention;
Figure 3 is a schematic diagram of a partial cut view of an example of the rotor according to an embodiment of the invention;
Figure 4 is a schematic diagram of another view of the example of the rotor according to an embodiment of the invention;
Figure 5 is a schematic diagram of an automotive electric or hybrid vehicle comprising a rotary electric machine according to an embodiment of the invention.

### DETAILED DESCRIPTION

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

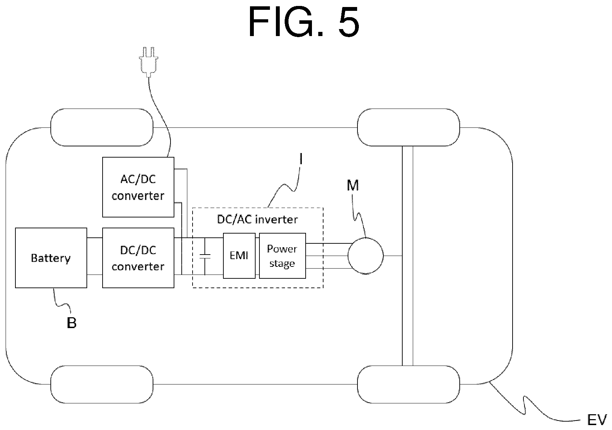

In reference to Figure 5, an aspect of the invention is an electric vehicle or a hybrid electric automotive vehicle EV comprising wheels and an electric drive configured to drive at least indirectly at least one of the wheels of the vehicle. The vehicle may comprise a high-voltage power supply battery B, preferably a rechargeable battery, for providing electric power to the electric drive.

Another aspect of the invention is the electric drive comprising a rotary electric machine M and an inverter I configured to convert a direct current (DC) voltage coming from the high-voltage power supply battery B into an alternating current (AC) voltage in order to drive the rotary electric machine M. The rotary electric machine M may in particular be a three-phase rotary electric machine supplied with a three-phase AC voltage.

The invention also relates to the rotary electric machine comprising a stator, referring to a fixed part of the rotary electric machine, and a rotor, referring to a rotating part of the rotary electric machine. In particular, the stator presents an annular shape and surrounds coaxially the rotor. Generally, the rotary electric machine comprises a casing covering both the stator and the rotor. Ordinarily, the stator comprises a stator body formed of a stack of stator laminations having a plurality of stator teeth projecting radially, and stator windings wound around the stator teeth.

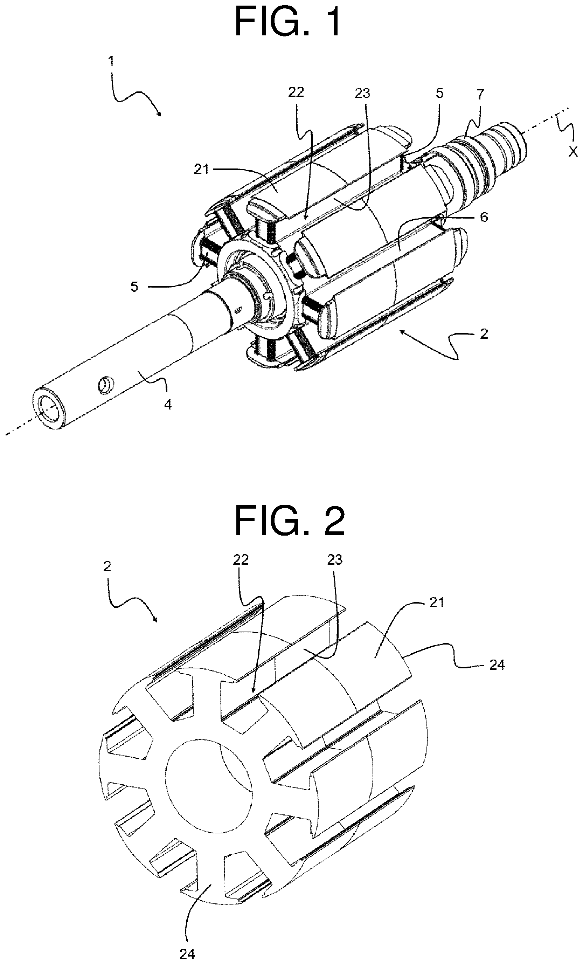

Figure 1 discloses a view of an example of the rotor 1 according to a further aspect of the invention. The rotor 1 is, in particular, a separately excited rotor, also commonly referred as a wound rotor or a slip ring rotor. In this type of rotor, the rotor comprises a field coil connected to an external power supply through slip rings 7. The slip rings 7 especially correspond to electromechanical devices configured to allow the exchange of electric power between a rotating element and a fixed element, here respectively the field coil and the external power supply.

With reference to Figure 1, the rotor 1 comprises a rotor shaft 4 configured to rotate around an axis X of rotation, and a rotor body 2 formed of a stack of laminations and being configured to be mounted coaxially on the rotor shaft 4. The laminations are especially stacked along the axis of rotation. The rotor body 2 may be for instance press-fitted on the rotor shaft 4.

Moreover, the rotor body 2 has a plurality of teeth 21 projecting radially and slots 22 corresponding to spaces between adjacent teeth of the plurality of teeth 21. The plurality of teeth 21 may notably comprise four, six, or eight teeth.

Figure 2 illustrates a view of an example of the rotor body 2. The field coil is wound around each tooth of the plurality of teeth 21 and passing through the slots 22. The field coil especially forms coil ends projecting axially from respectively two axial ends 24 of the rotor body 2.

The rotor 1 further comprises two end plates 5, as represented in Figure 1, configured to come respectively against the two axial ends 24 of the rotor body 2. The two end plates 5 notably present an annular shape. The shape of both of the two end plates 5 may advantageously be substantially similar to the shape of the two axial ends 24 of the rotor body 2 such that to be able to cover the two axial ends 24.

Then, the field coil 3 passes through the slots 22 and over the two end plates 5. In other words, the two end plates 5 are notably located between the rotor body 2 and the coil ends such that to provide a mechanical holding of the stack of laminations and to electrically insulate the field coil from the rotor body 2. For the late reason, the two end plates 5 should at least be configured to come between the two axial ends 24 of rotor body 2 and the coil ends of the field coil. Thus, the two end plates 5 may have a plurality of end plate teeth corresponding to the plurality of teeth 21.

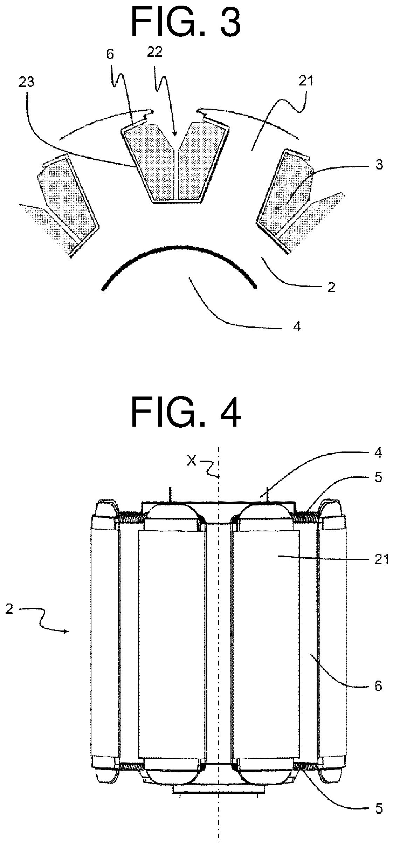

Figure 3 schematically represent a partial cut view of an example of the rotor according to the invention. The rotor also comprises an insulation system 6 arranged on walls 23 of the slots 22 between the rotor body 2 and the field coil 3 such that to electrically insulate the rotor body 2 from the field coil 3. The walls 23 of the slots 22 especially correspond to faces of the rotor body 2 directed towards the slots 22. Notably, it can be noted that the insulation system has a plurality of parts, each part of the insulation system being associated to one of the slots of the rotor body.

Figure 4 discloses another view of the example of the rotor according to the invention. The insulation system 6 and at least one of the two end plates 5 are overmolded on the rotor body 2 such that to form together a one-piece overmolded assembly.

In a preferred embodiment, the insulation system 6 and the two end plates 5 are overmolded on the rotor body 2 such that to form together the one-piece overmolded assembly.

The present invention gives thus the substantial gain of easing the manufacturing of the rotor, notably by reducing the number of pieces to assemble together. More precisely, compared to a conventional solution with two separate end plates, and a plurality of insulation papers depending on the number of teeth of the rotor body, the invention allows to prevent having to assemble all these different pieces together. For example, the invention enables to avoid using a glue for fixating at least one of the two end plates, as at least one of the two end plates is advantageously integrated to the one-piece overmolded assembly. Also, a glue could be used for fixating at least one of the two end plates to the corresponding axial end of the rotor body, if appropriate.

Besides, the invention provides an alternative to using an insulation paper for providing electrical insulation between the rotor body and the field coil in-between the plurality of teeth. Thus, the invention prevents the problem of positioning the insulation paper, which is generally performed manually. The one-piece overmolded assembly is less likely to move during winding the field coil around the plurality of teeth, and during the in-service life of the rotor. In addition, the invention makes it possible to automatize the process of setting up the electrical insulation between the rotor body and the field coil.

Moreover, the one-piece overmolded assembly allows to improve the mechanical holding of the two end plates and of the insulation system, especially by reducing potential twisting or by preventing an improper positioning of either one of the two end plates or of the insulation system. In fact, at least one of the two end plates especially contributes to counter undesired relative axial movements of the one-piece overmolded assembly, and the insulation system contributes to counter undesired relative tangential movements of the one-piece overmolded assembly.

The invention also allows to achieve more complex geometries and a higher quality of the two end plates and for the insulation system.

In an advantageous manner, the two end plates 5 and the insulation system 6 are made out of a plastic material able to electrically insulate the rotor body 2 from the field coil 3. The materials of the two end plates 5 and of the insulation system 6 are in particular compatible with an overmolding process or an injection molding process. The materials of the two end plates 5 and of the insulation system 6 should also present diamagnetic properties and a sufficient value of electrical resistivity.

For instance, the two end plates 5 and the insulation system 6 are made out of a polyphthalamide material, commonly abbreviated as PPA.

Although, the two end plates 5 and the insulation system 6 may respectively be made out of a different material. This allows advantageously to adjust the material to the specific needs on one hand of the two end plates 5 and on the other hand of the insulation system 6, notably in terms of mechanical resistance, and of electric and magnetic properties.

The one-piece overmolded assembly may further comprise cooling channels configured to channel a cooling liquid for cooling the rotor.

The present invention also concerns a method for producing the rotor as described previously. The method comprises:
- stacking the laminations together such that to form the rotor body 2;
- overmolding the rotor body 2 with the insulation system 6 and at least one of the two end plates 5.

Then, in the preferred embodiment, overmolding comprises overmolding the rotor body 2 with the insulation system 6 and the two end plates 5.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A rotor (1) for a rotary electric machine (M), the rotor (1) comprising:
- a rotor shaft (4) configured to rotate around an axis (X) of rotation;
- a rotor body (2) formed of a stack of laminations and being configured to be mounted coaxially on the rotor shaft (4), the rotor body (2) having a plurality of teeth (21) projecting radially and slots (22) corresponding to space between adjacent teeth of the plurality of teeth (21);
- two end plates (5) configured to come respectively against two axial ends (24) of the rotor body (2);
- a field coil (3) wound around each tooth of the plurality of teeth (21), the field coil (3) passing through the slots (22) and over the two end plates (5);
- an insulation system (6) arranged on walls (23) of the slots (22) between the rotor body (2) and the field coil (3) such that to electrically insulate the rotor body (2) from the field coil (3);
**characterized in that** the insulation system (6) and at least one of the two end plates (5) are overmolded on the rotor body (2) such that to form together a one-piece overmolded assembly.

2. The rotor (1) as claimed in claim 1, wherein the insulation system (6) and the two end plates (5) are overmolded on the rotor body (2) such that to form together the one-piece overmolded assembly.

3. The rotor (1) as claimed in any of the preceding claims, wherein the two end plates (5) and the insulation system (6) are made out of a plastic material able to electrically insulate the rotor body (2) from the field coil (3).

4. The rotor (1) as claimed in any of the preceding claims, wherein the two end plates (5) and the insulation system (6) are made out of a polyphthalamide material.

5. The rotor (1) as claimed in any of the preceding claims, wherein the two end plates (5) and the insulation system (6) are respectively made out of a different material.

6. A method for producing the rotor (1) as claimed in any of the preceding claims, the method comprising:
- stacking the laminations together such that to form the rotor body (2);
- overmolding the rotor body (2) with the insulation system (6) and at least one of the two end plates (5).

7. The method as claimed in the previous claim, wherein overmolding comprises overmolding the rotor body (2) with the insulation system (6) and the two end plates (5).

8. A rotary electric machine (M) for an electric or a hybrid vehicle (EV), the rotary electric machine (M) comprising the rotor (1) according to any of the claims 1 to 5.
